# EUROPEAN PATENT SPECIFICATION

(11) **EP 3 650 726 B1**
(45) Date of publication and mention of the grant of the patent: **26.05.2021**
(21) Application number: 19208722.9
(22) Date of filing: 12.11.2019
(51) Int. Cl.: F16D 65/092

(54) **VARIABLE-FLEXIBILITY PAD FOR DISC BRAKES FOR RAILWAY VEHICLES**
BELAG MIT VARIABLER FLEXIBILITÄT FÜR SCHEIBENBREMSEN FÜR SCHIENENFAHRZEUGE
GARNITURE DE FREIN À FLEXIBILITÉ VARIABLE POUR FREINS À DISQUE DE VÉHICULES FERROVIAIRES

(30) Priority: 12.11.2018 IT 201800010237
(43) Date of publication of application: 13.05.2020
(73) Proprietor: Cofren S.r.L., 83100 Avellino (IT)
(72) Inventor: DE SOCCIO, Vittorio, 83100 AVELLINO (IT)
(74) Representative: Bosman, Cesare

(56) References cited:
- DE-A1-102013 002 588
- DE-C1- 19 727 705
- GB-A- 953 520
- DATABASE WPI Week 200780 Thomson Scientific, London, GB; AN 2007-869030 XP002792546, -& RU 2 309 073 C1 (FRICTION & HEAT RESISTANT MATERIALS WKS) 27 October 2007 (2007-10-27)

## Description

### CROSS-REFERENCE TO RELATED APPLICATIONS

This patent application claims priority from Italian patent application no. 102018000010237 filed on 12/11/2018.

### TECHNICAL FIELD

The present invention relates to a pad for disc brakes for low-energy railway vehicles A pad with the features according to the preamble of claim 1 is for instance known from DE 197 27 705 C1.

### BACKGROUND ART

As already known, disc brakes are subject to high stresses and to obtain an optimal braking action it is necessary to have a good transmission of the braking force from the pad to the disc.

For low-energy trains, the use of pads comprising buttons of organic composite material as friction elements acting on the disc is known. One of the adopted solutions provides that each pad substantially consists of a fixing plate, useful for fixing the pad to a disc brake structure, and a friction element made of organic composite material manufactures by moulding on the fixing plate.

Generally, the fixing plate has a "dovetail" shape, while a plurality of grooves formed on the friction element define a plurality of friction buttons.

Besides having to exert an effective pressure on the disc in terms of braking, the pads for disc brakes for railway vehicles must also ensure low noise during the braking action. It should be considered that low noise has increasingly become a discriminant for the choice of the disc brakes to be used.

As can be immediately clear to a person skilled in the art, the above requests are strictly related to the components with which the pads are made.

The inventor of the present invention has created a particular disc brake pad solution for low-energy railway vehicles, whose technical characteristics are such as to guarantee a further decrease in noise during braking, while maintaining a highly efficient braking.

### DISCLOSURE OF INVENTION

The object of the present invention is a disc brake pad for railway vehicles, whose essential characteristics are reported in claim 1, and whose preferred and/or auxiliary characteristics are reported in claims 2-11.

### BRIEF DESCRIPTION OF THE DRAWINGS

For a better understanding of the invention, an embodiment is shown below for illustrative and non-limiting purposes with the help of the figures in the attached drawing, in which:
Figure 1 is a perspective view from above, with transparent parts for clarity's sake, of the pad object of the present invention;
Figure 2 is a perspective view from below with transparent parts of the pad of Figure 1;
Figure 3 is a bottom perspective view of an element of the pad of Figure 1.

### BEST MODE FOR CARRYING OUT THE INVENTION

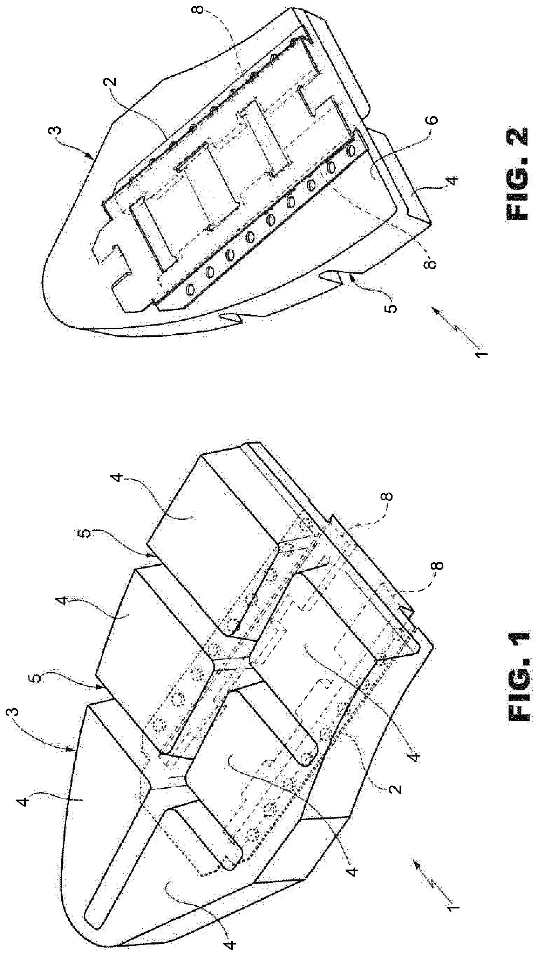

In Figures 1 and 2, 1 indicates as a whole a disc brake pad object of the present invention.

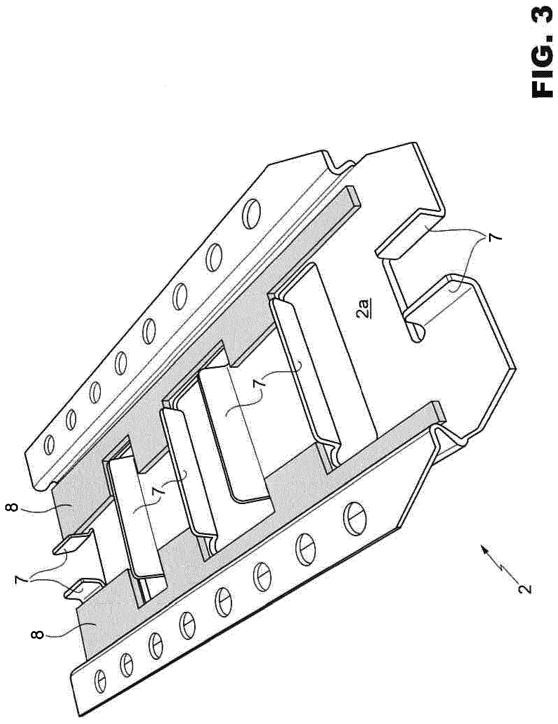

The pad 1 comprises a fixing plate 2 (better visible in Figure 3) having a "dovetail" shape for fixing the pad 1 to a disc brake structure, and a friction element 3 made of composite organic material and obtained by moulding on the fixing plate 2.

Six friction buttons 4 are defined on the friction element 3 by means of grooves 5. In other words, the friction element 3 is composed of a base portion 6 on which the fixing plate 2 is crimped and of a plurality of friction buttons 4 extending from the base portion 6.

In particular, as shown in Figure 3, to ensure the correct clamping to the friction element 3, the fixing plate 2 comprises a series of clamping portions 7 extending substantially perpendicularly from a lower surface 2a of the fixing plate 2. The clamping portions 7 are embedded in the base portion 6, which extends until it is in contact with the lower surface 2a.

In this way, the fixing plate 2 is firmly fixed to the friction element 3 to ensure a correct and effective operation of the pad 1 as a whole.

As shown in the attached figures, the pad 1 comprises two metal reinforcement elements 8 with a variable section fixed to the lower surface 2a. In particular, the two metal reinforcement elements 8 have an oblong shape and extend parallel to each other at two opposite sides of the lower surface 2a of the fixing plate 2.

The two metal reinforcement elements 8 are made of steel and may or may not be made of the same material as the fixing plate 2.

Preferably, the two reinforcing metal elements 8 have a quadrangular section with variable thickness.

In the present invention, the thickness of the reinforcing metal elements 8 means their height, namely their size perpendicular to the application surface of the friction buttons 4.

In particular, the two reinforcing metal elements 8 are made of alloy steel.

The two reinforcing metal elements 8 have a continuously varying thickness. Although it has been verified that regardless of the direction of the variation of the thickness of the reinforcing metal elements 8, it is obtained a decrease in the noise produced during the braking phase, the evidence shows anyway that a greater reduction of the noise during the braking phase is obtained when there is a progressive thickness decrease going from the rear portion of the pad to the front portion of the pad.

With regard to the pad of the example reported in the present description, the rear portion of the pad exerts pressure on a more central part of the disc, while the front portion of the pad exerts pressure on a more peripheral part of the disc.

What has been described above clearly shows that the present invention is based on a different flexibility of the various portions of the pad, due to the variation in the thickness of the reinforcing metal elements 8, which are embedded in the friction element. In fact, since the reinforcing metal elements 8 are embedded inside the friction element 3, their presence necessarily influences the flexibility of the friction element under pressure on the disc and, consequently, a variation in the thickness of the metal reinforcement elements 8 involves a variation in the flexibility of the friction element as a whole. The above results in the fact that the friction buttons 4, according to their correspondence with the metal reinforcement elements 8, have a different elasticity under pressure on the disc.

It has been experimentally proven that the pad of the present invention produces a lower noise during braking than the one produced by a comparison pad, which differs from the one of the invention only for the absence of the elastic reinforcement elements. The pad of the invention and the comparison pad have shown the same braking efficiency.

## Claims

1. A pad (1) for disc brakes for railway vehicles comprising a fixing plate (2), which has a "dovetail" shape, and a friction element (3), which is made of a composite organic material and is fixed to said fixing plate; said pad being **characterized in that** it comprises at least one metal reinforcement element (8) having a variable cross-section, which is longitudinally fixed on a surface (2a) of said fixing plate (2), said surface (2a) being covered by said friction element (3) so that said metal reinforcement element (8) extends inside said friction element (3).

2. A pad (1) for disc brakes according to claim 1, **characterized in that** said metal reinforcement element (8) has a variable thickness.

3. A pad (1) for disc brakes according to claim 1 or 2, **characterized in that** said metal reinforcement element (8) has an oblong shape.

4. A pad (1) for disc brakes according to claim 3, **characterized in that** it comprises two metal reinforcement elements (8) extending parallel to one another at two opposite sides of the lower surface (2a) of the fixing plate (2).

5. A pad (1) for disc brakes according to any one of the preceding claims, **characterized in that** said metal reinforcement element (8) has a quadrangular cross-section.

6. A pad (1) for disc brakes according to any one of the preceding claims, **characterized in that** said metal reinforcement element (8) is made of steel.

7. A pad (1) for disc brakes according to any one of the preceding claims, **characterized in that** said metal reinforcement element (8) is made of alloyed steel.

8. A pad (1) for disc brakes according to any one of the preceding claims, **characterized in that** said friction element (3) is manufactured by moulding on the fixing plate (2) .

9. A pad (1) for disc brakes according to any one of the preceding claims, **characterized in that** six friction buttons (4) are formed in the friction element (3) by means of grooves (5).

10. A pad (1) for disc brakes according to any one of the claims 2-9, **characterized in that** said reinforcement element (8) has a continuous variation of its thickness.

11. A pad (1) for disc brakes according to claim 10, **characterized in that** said reinforcement element (8) has a progressive decrease of its thickness moving from a rear portion of the pad to a front portion of the fixing plate (2) .

## Patentansprüche

1. Belag (1) für Scheibenbremsen für Schienenfahrzeuge, aufweisend eine Befestigungsplatte (2), die eine "Schwalbenschwanz"-Form aufweist, und ein Reibungselement (3), das aus einem organischen Verbundmaterial gefertigt und an der Befestigungsplatte befestigt ist; wobei der Belag **dadurch gekennzeichnet ist, dass** er mindestens ein Metallverstärkungselement (8) mit einem variablen Querschnitt aufweist, das in Längsrichtung an einer Oberfläche (2a) der Befestigungsplatte (2) befestigt ist, wobei die Oberfläche (2a) durch das Reibungselement (3) abgedeckt ist, sodass sich das Metallverstärkungselement (8) innerhalb des Reibungselements (3) erstreckt.

2. Belag (1) für Scheibenbremsen nach Anspruch 1, **dadurch gekennzeichnet, dass** das Metallverstärkungselement (8) eine variable Dicke aufweist.

3. Belag (1) für Scheibenbremsen nach Anspruch 1 oder 2, **dadurch gekennzeichnet, dass** das Metallverstärkungselement (8) eine längliche Form aufweist.

4. Belag (1) für Scheibenbremsen nach Anspruch 3, **dadurch gekennzeichnet, dass** er zwei Metallverstärkungselemente (8) aufweist, die sich parallel zueinander an zwei gegenüberliegenden Seiten der unteren Oberfläche (2a) der Befestigungsplatte (2) erstrecken.

5. Belag (1) für Scheibenbremsen nach einem der vorhergehenden Ansprüche, **dadurch gekennzeichnet, dass** das Metallverstärkungselement (8) einen viereckigen Querschnitt aufweist.

6. Belag (1) für Scheibenbremsen nach einem der vorhergehenden Ansprüche, **dadurch gekennzeichnet, dass** das Metallverstärkungselement (8) aus Stahl gefertigt ist.

7. Belag (1) für Scheibenbremsen nach einem der vorhergehenden Ansprüche, **dadurch gekennzeichnet, dass** das Metallverstärkungselement (8) aus legiertem Stahl gefertigt ist.

8. Belag (1) für Scheibenbremsen nach einem der vorhergehenden Ansprüche, **dadurch gekennzeichnet, dass** das Reibungselement (3) durch Anformen auf der Befestigungsplatte (2) hergestellt ist.

9. Belag (1) für Scheibenbremsen nach einem der vorhergehenden Ansprüche, **dadurch gekennzeichnet, dass** sechs Reibungsknöpfe (4) im Reibungselement (3) mittels Rillen (5) ausgebildet sind.

10. Belag (1) für Scheibenbremsen nach einem der Ansprüche 2 bis 9, **dadurch gekennzeichnet, dass** das Verstärkungselement (8) eine kontinuierliche Variation seiner Dicke aufweist.

11. Belag (1) für Scheibenbremsen nach Anspruch 10, **dadurch gekennzeichnet, dass** das Verstärkungselement (8) von einem hinteren Abschnitt des Belags zu einem vorderen Abschnitt der Befestigungsplatte (2) eine fortschreitende Verringerung seiner Dicke aufweist.

## Revendications

1. Garniture de frein (1) pour des freins à disque pour des véhicules ferroviaires comprenant une plaque de fixation (2), laquelle présente une forme de "queue d'aronde", et un élément de friction (3), lequel est réalisé en un matériau organique composite et est fixé à ladite plaque de fixation ; ladite garniture de frein étant **caractérisée en ce qu'**elle comprend au moins un élément de renforcement métallique (8) qui présente une section en coupe transversale variable, lequel est fixé longitudinalement sur une surface (2a) de ladite plaque de fixation (2), ladite surface (2a) étant recouverte par ledit élément de friction (3) de telle sorte que ledit élément de renforcement métallique (8) soit étendu à l'intérieur dudit élément de friction (3).

2. Garniture de frein (1) pour des freins à disque selon la revendication 1, **caractérisée en ce que** ledit élément de renforcement métallique (8) présente une épaisseur variable.

3. Garniture de frein (1) pour des freins à disque selon la revendication 1 ou 2, **caractérisée en ce que** ledit élément de renforcement métallique (8) présente une forme oblongue.

4. Garniture de frein (1) pour des freins à disque selon la revendication 3, **caractérisée en ce qu'**elle comprend deux éléments de renforcement métalliques (8) qui sont étendus parallèlement l'un à l'autre au niveau de deux côtés opposés de la surface inférieure (2a) de la plaque de fixation (2).

5. Garniture de frein (1) pour des freins à disque selon l'une quelconque des revendications précédentes, **caractérisée en ce que** ledit élément de renforcement métallique (8) présente une section en coupe transversale quadrangulaire.

6. Garniture de frein (1) pour des freins à disque selon l'une quelconque des revendications précédentes, **caractérisée en ce que** ledit élément de renforcement métallique (8) est réalisé en acier.

7. Garniture de frein (1) pour des freins à disque selon l'une quelconque des revendications précédentes, **caractérisée en ce que** ledit élément de renforcement métallique (8) est réalisé en acier allié.

8. Garniture de frein (1) pour des freins à disque selon l'une quelconque des revendications précédentes, **caractérisée en ce que** ledit élément de friction (3) est fabriqué par moulage sur la plaque de fixation (2).

9. Garniture de frein (1) pour des freins à disque selon l'une quelconque des revendications précédentes, **caractérisée en ce que** six boutons de friction (4) sont formés dans l'élément de friction (3) au moyen de rainures (5).

10. Garniture de frein (1) pour des freins à disque selon l'une quelconque des revendications 2 à 9, **caractérisée en ce que** ledit élément de renforcement (8) présente une variation continue de son épaisseur.

11. Garniture de frein (1) pour des freins à disque selon la revendication 10, **caractérisée en ce que** ledit élément de renforcement (8) présente une diminution progressive de son épaisseur au fur et à mesure d'un déplacement depuis une partie arrière de la garniture de frein jusqu'à une partie avant de la plaque de fixation (2).
